# EUROPÄISCHE PATENTSCHRIFT

(11) **EP 2 372 318 B1**
(45) Veröffentlichungstag und Bekanntmachung des Hinweises auf die Patenterteilung: **18.03.2020**
(21) Anmeldenummer: 10157940.7
(22) Anmeldetag: 26.03.2010
(51) Int. Cl.: G01F 23/284, G01F 23/296

(54) **Störechospeicherung bei Behälterrauschen**
Noise echo storage for container noises
Accumulation d'écho parasite dans des bruits de récipients

(43) Veröffentlichungstag der Anmeldung: 05.10.2011
(73) Patentinhaber: VEGA Grieshaber KG, 77709 Wolfach (DE)
(72) Erfinder: Griessbaum, Karl, 77796 Mühlenbach (DE); Welle, Roland, 77709 Oberwolfach (DE)
(74) Vertreter: Maiwald Patent- und Rechtsanwaltsgesellschaft mbH

(56) Entgegenhaltungen:
- DE-A1- 3 337 690
- DE-A1- 4 308 373
- DE-A1- 4 407 369
- US-A1- 2004 011 126
- US-A1- 2004 257 269
- US-A1- 2009 235 736

## Beschreibung

### Gebiet der Erfindung

Die vorliegende Erfindung betrifft die Füllstandmessung. Insbesondere betrifft die Erfindung ein Füllstandmessgerät zur Messung eines Füllstands und zur Störechospeicherung, ein Verfahren zur Messung eines Füllstands und zur Störechospeicherung, ein Programmelement und ein computerlesbares Medium.

### Technischer Hintergrund der Erfindung

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet der Sensor die vom Füllgut und den Behältereinbauten reflektierten Echosignale auf, und leitet daraus den jeweiligen Füllstand ab. Andere Füllstandsensoren arbeiten nach dem Prinzip der geführten Mikrowellen.

Das üblicherweise nach dem aktuellen Stand der Technik verwendete Verfahren baut im Wesentlichen auf einer vom Benutzer bei leerem Behälter durchzuführenden Störechospeicherung auf.

DE 33 37 690 A1, US 5,157,639 und EP 1 628 119 A2 beschreiben solche Verfahren.

Die US 2004/0257269 A1 beschreibt ein Verfahren zum Bestimmen von Erwartungsbereichen für Echos von Füllstand-Hüllkurven, die durch ein Füllstandmessgerät erstellt wurden. Die Bestimmung der Erwartungsbereiche erfolgt unter Berücksichtigung der zeitlichen Abhängigkeit von vorhergehenden Echodaten.

Die US 2009/0235736 A1 beschreibt ein Verfahren zum Auswerten und zum Korrigieren von Gesamtmesssignalen von Messgeräten, bei welchen ein Messsignal in Richtung eines Mediums ausgesendet und an deren Oberfläche als Echosignal sowie an Störelementen als Interferenzsignal reflektiert wird. Eine unabhängige Referenzkurve wird auf Basis einer momentanen statischen Referenzkurve ermittelt, wobei die Interferenzsignale basierend auf einem Maskieralgorithmus aus der Echokurve ausgeblendet werden, wenn sich ein technischer Prozesszustand im Behälter oder ein technischer Messzustand des Messgeräts verändert.

Die US 2004/0011126 A1 betrifft eine Vorrichtung zum Messen eines Füllstandes in einem Behälter, welches nach dem Laufzeit-Prinzip arbeitet, bei welchem ausgesendete Wellen von einer Oberfläche des Füllgutes reflektiert werden. Die Vorrichtung weist ferner Grenzsensoren auf, die an der Containerwand angeordnet sind, wobei jeder Grenzsensor ein Signal aussendet, welches angibt, ob die Oberfläche des Füllgutes ober- oder unterhalb des jeweiligen Grenzsensors ist. Die Signale der Grenzsensoren werden dazu verwendet, um das Messergebnis des Füllstandsensors zu überprüfen und gegebenenfalls zu korrigieren.

Die dort beschriebenen Verfahren können in der praktischen Umsetzung zu Problemen führen.

### Zusammenfassung der Erfindung

Es ist eine Aufgabe der Erfindung, eine Initialisierung und Aktualisierung eines Störechospeichers bei erhöhtem Behälterrauschen bereitzustellen.

Diese Aufgabe wird durch die Merkmale der unabhängigen Patentansprüche gelöst und Weiterbildungen der Erfindung ergeben sich aus den Unteransprüchen.

Es sind ein Füllstandmessgerät zur Messung eines Füllstands und zur Störechospeicherung, ein Verfahren zur Messung eines Füllstands und zur Störechospeicherung, ein Programmelement und ein computerlesbares Medium gemäß den Merkmalen der unabhängigen Patentansprüche angegeben. Die im Folgenden beispielsweise im Hinblick auf das Verfahren beschriebenen Merkmale lassen sich in dem Füllstandmessgerät implementieren und sind somit auch gleichzeitig Merkmale des Füllstandmessgeräts. Ebenso lassen sich die im Folgenden genannten Merkmale des Füllstandmessgeräts auch als Verfahrensschritte implementieren.

Gemäß einem ersten Aspekt der Erfindung ist ein Füllstandmessgerät zur Messung eines Füllstands und zur Störechospeicherung angegeben, welches eine Recheneinheit zur Aktualisierung von Störechodaten auf Basis eines ersten Wertes, der mit einem ersten Rauschen korrespondiert, aufweist.

Bei dem "Rauschen" handelt es sich um sensoreigenes Rauschen, beispielsweise um thermisches Rauschen, und/oder Behälterrauschen. In anderen Worten handelt es sich also um Rauschen, das auf den Sensor zurückzuführen ist und/oder Rauschen, das auf den Behälter zurückzuführen ist.

Gemäß einem weiteren Aspekt der Erfindung ist ein Verfahren zur Messung eines Füllstands und zur Störechospeicherung angegeben, bei dem Störechodaten auf Basis eines ersten Wertes, der mit einem ersten Rauschen korrespondiert, aktualisiert werden.

Gemäß einem weiteren Aspekt der Erfindung ist ein Programmelement angegeben, das, wenn es auf einem Prozessor eines Füllstandmessgeräts ausgeführt wird, den Prozessor anleitet, die oben und im Folgenden beschriebenen Schritte durchzuführen.

Gemäß einem weiteren Aspekt der Erfindung ist ein computerlesbares Medium angegeben, auf dem ein Programmelement gespeichert ist, das, wenn es auf einem Prozessor (also einer Recheneinheit) eines Füllstandmessgeräts ausgeführt ist, den Prozessor anleitet, die oben und im Folgenden beschriebenen Schritte durchzuführen.

Gemäß einem Ausführungsbeispiel der Erfindung ist die Recheneinheit zur Aktualisierung der Störechodaten auf Basis eines zweiten Wertes ausgeführt, der mit einem zweiten Rauschen korrespondiert, wobei es sich bei dem zweiten Rauschen um sensoreigenes Rauschen oder um Behälterrauschen handelt.

In anderen Worten werden die Störechodaten sowohl auf Basis des Behälterrauschens als auch auf Basis des sensoreigenen Rauschens aktualisiert und/oder initialisiert.

Insbesondere können mehrere Werte, die auf ein Rauschen zurückzuführen sind, zur Aktualisierung und/oder Initialisierung der Störechodaten verwendet werden. Gemäß einem weiteren Ausführungsbeispiel der Erfindung ist die Recheneinheit zur Initialisierung von Störechodaten auf Basis des ersten Wertes und/oder des zweiten Wertes ausgeführt.

Gemäß einem weiteren Ausführungsbeispiel der Erfindung ist die Recheneinheit zur Bestimmung, ob der erste Wert, der mit dem aktuellen Rauschen korrespondiert (also dem aktuellen Behälterrauschen oder dem aktuellen sensoreigenen Rauschen), größer ist als der zweite Wert, der mit einem vorbestimmten sensoreigenen Rauschen korrespondiert, ausgeführt. Wenn der erste Wert größer ist als der zweite Wert (oder wenn der erste Wert deutlich größer ist als der zweite Wert) aktiviert die Recheneinheit einen Störspeicheraktualisierungsmodus.

In anderen Worten wird der Störspeicheraktualisierungsmodus aktiviert, wenn das aktuell gemessene Rauschen größer ist, als ein z.B. bei der Sensorfertigung gespeichertes Referenzrauschen.

Gemäß einem weiteren Ausführungsbeispiel der Erfindung weist das Füllstandmessgerät weiterhin einen Speicher auf, in welchem beispielsweise der zweite Wert abgelegt sein kann. Insbesondere kann in diesem Speicher die Störechokurve abgelegt sein.

Gemäß einem weiteren Ausführungsbeispiel der Erfindung führt eine Abarbeitung der Verfahrensschritte des Störspeicheraktualisierungsmodus zu einer Verringerung von Werten einer in dem Speicher abgelegten Störechokurve, wenn der erste Wert (also z. B. das Behälterrauschen oder das thermische Rauschen) sinkt. Beispielsweise sinken alle Amplitudenwerte der Störechokurve, die nichts mit dem tatsächlichen Füllstandecho oder einem Störecho zu tun haben (also lediglich auf Rauschen zurückzuführen sind).

Gemäß einem weiteren Ausführungsbeispiel der Erfindung handelt es sich bei dem Füllstandmessgerät um einen Füllstandradar.

### Kurze Beschreibung der Figuren

Fig. 1 zeigt eine mögliche Vorgehensweise bei der Echosignalverarbeitung.
Fig. 2 zeigt ein in einen Behälter eingebautes Füllstandmessgerät sowie eine entsprechende Echokurve.
Fig. 3 zeigt eine Störechobewertung in einem Füllstandmessgerät.
Fig. 4 zeigt eine Echokurve bei einem leeren Behälter.
Fig. 5 zeigt eine Echokurve bei einem leicht gefüllten Behälter.
Fig. 6 zeigt die Störechospeicherung.
Fig. 7 zeigt die Störechobewertung
Fig. 8 zeigt ein Flussdiagramm eines Verfahrens.
Fig. 9 zeigt die Störechospeicherung gemäß der Erfindung.
Fig. 10 zeigt ein Flussdiagramm zur Störspeicherinitialisierung.
Fig. 11 zeigt ein Flussdiagramm zur Füllstandmessung.
Fig. 12 zeigt ein Flussdiagramm zur Störechobewertung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

### Detaillierte Beschreibung von Ausführungsbeispielen

Die vorliegende Erfindung bezieht sich auf ein Verfahren zur Messung von Füllständen aller Art.

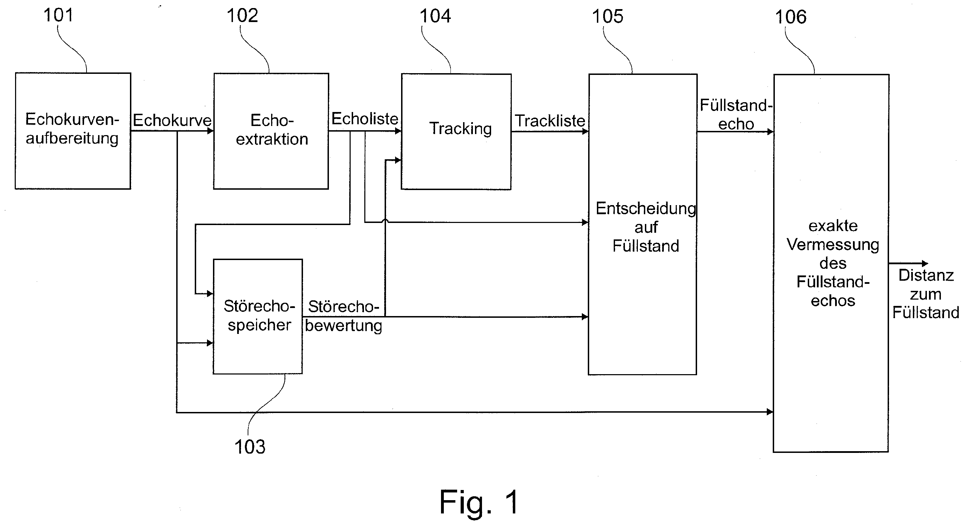

Fig. 1 zeigt den grundsätzlichen Ablauf der Echosignalverarbeitung innerhalb eines Füllstandmessgerätes. Im Block "Echokurvenaufbereitung" 101 sind alle Hardware- und Softwareeinheiten enthalten, die benötigt werden, um eine Echokurve als Abbild der aktuellen Reflexionsverhältnisse innerhalb eines Behälters bereitzustellen. Die Echokurve wird beispielsweise in digitaler Form innerhalb eines Mikroprozessorsystems erfasst, und mit Hilfe bestimmter Verfahren auf darin enthaltene Echos untersucht.

Die innerhalb des Blocks "Echoextraktion" 102 zu diesem Zweck angewendeten Verfahren umfassen insbesondere Verfahren aus dem Bereich der schwellwertbasierenden Echoextraktion oder auch Verfahren auf Basis einer skalenbasierenden Echoextraktion. Nach Abarbeitung des Echoextraktionsverfahrens wird eine digitale Echoliste bereitgestellt, die beispielsweise Angaben zu Anfang, Ort und Ende eines oder mehrerer in der Echokurve enthaltenen Echos beinhaltet.

Innerhalb des Störechospeichers 103 werden die Echos der Echoliste mit einer vorab im Gerät angelegten Störechokurve verglichen, um Informationen darüber zu gewinnen, welche der Echos der Echoliste von fest im Behälter eingebauten Störstellen verursacht werden. Die gewonnenen Informationen werden in Form einer Störechobewertungsliste nach außen hin bereitgestellt, und können beispielsweise vom Tracking 104, aber auch von der Entscheidung auf Füllstand 105 nutzbringend verwendet werden.

Um die Zuverlässigkeit der Echosignalverarbeitung eines Füllstandmessgerätes weiter zu erhöhen, werden die gefundenen Echos innerhalb des Blocks "Tracking" 104 in einen historischen Kontext gestellt. Innerhalb des Tracking wird insbesondere der Verlauf des Ortes eines Echos über mehrere Einzelmessungen hinweg verfolgt, und diese gesammelte Information in Form eines Tracks im Speicher repräsentiert. Die gesammelten Historieninformationen mehrerer Echos werden in Form einer Trackliste nach außen hin bereitgestellt.

Im Block "Entscheidung auf Füllstand" 105 werden die Daten der aktuellen Echoliste, die Informationen über den zeitlichen Verlauf einzelner Echos und die Bewertungen des Störechospeichers miteinander abgeglichen. Von besonderer Bedeutung zur Unterdrückung von Störreflexionen ist dabei die Berücksichtigung der vom Störspeicher ermittelten Störechobewertung.

Um die Genauigkeit der Füllstandmessung weiter zu verbessern, kann die Position des bestimmten Füllstandechos durch den optionalen Block "exakte Vermessung des Füllstandechos" 106 unter Anwendung rechenzeitintensiver Verfahren, beispielsweise Interpolationsverfahren, mit hoher Genauigkeit bestimmt werden.

Die bestimmte Distanz zum Füllstand wird nach außen hin bereitgestellt. Die Bereitstellung kann in analoger Form (4..20 mA Schnittstelle) oder auch in digitaler Form (Feldbus) erfolgen.

Die Vorteile der Erfindung ergeben sich aus den speziellen Randbedingungen, denen die Echosignalverarbeitung innerhalb eines Füllstandmessgerätes unterliegt.

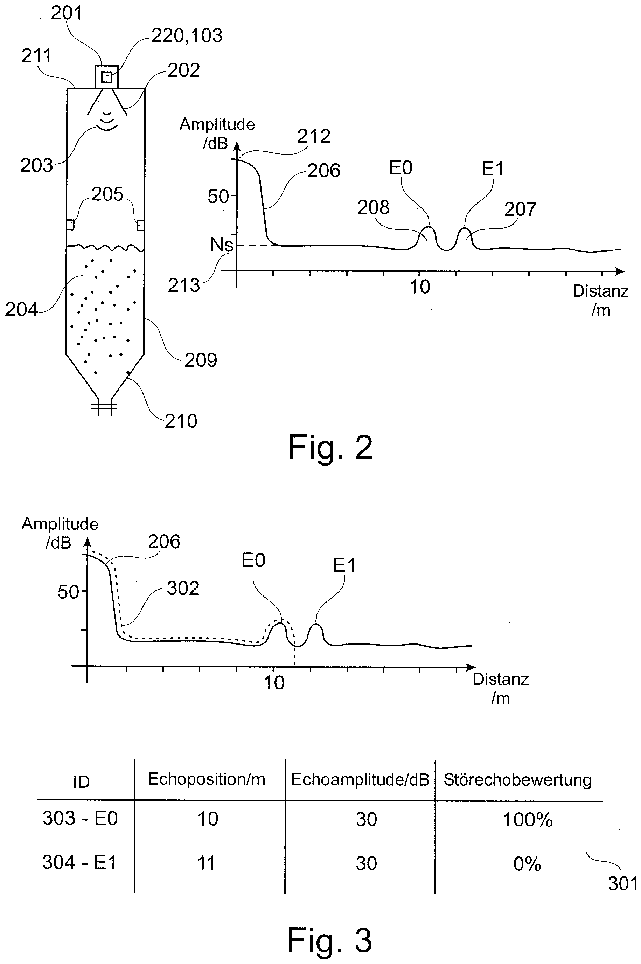

Fig. 2 zeigt eine typische Anwendung eines solchen Gerätes.

Es sei an dieser Stelle darauf hingewiesen, dass sämtliche Pegel in der vorliegenden Beschreibung und in den zugehörigen Figuren als Relativpegel zu verstehen sind. Der Absolutpegel, welcher als Bezugsgröße für die Berechnung der Relativpegel verwendet wird, hat auf die Funktionsweise der vorliegenden Erfindung keinerlei Einfluss.

Das Füllstandmessgerät 201 strahlt über die Antenne 202 ein Signal 203 in Richtung des zu vermessenden Mediums 204 ab. Das Füllstandmessgerät selbst kann mit Hilfe von Ultraschall, Radar, Laser oder dem Prinzip der geführten Mikrowelle die Distanz zum Medium ermitteln. Als Signale kommen dementsprechend sowohl Ultraschallwellen als auch elektromagnetische Wellen in Betracht. Das Medium 204 reflektiert die auftreffende Welle zurück zum Messgerät, wo diese empfangen und von der Recheneinheit 220 verarbeitet wird.

Gleichzeitig wird das abgestrahlte Signal auch von Behältereinbauten, beispielsweise einer umlaufenden Schweißnaht 205 reflektiert. Die im Füllstandmessgerät 201 empfangene Echokurve 206 kann somit neben dem vom Füllstand 204 hervorgerufenen Nutzecho 207 auch Echos von fest eingebauten Störstellen 208 enthalten, welche nachfolgend als Störechos bezeichnet werden. Der Füllgutbehälter 209 besitzt in dem vorliegenden Beispiel einen konischen Auslauf 210.

Innerhalb der nun anlaufenden Signalverarbeitung wird die Echokurve gezielt auf Echos hin untersucht (siehe Schritt 102 in Fig. 1). Als Ergebnis der Echoextraktion wird eine Echoliste 301 nach dem Schema der Fig. 3 erzeugt. Die Echoliste beinhaltet neben den charakteristischen Kennwerten des von der Schweißnaht 205 erzeugten Störechos E0, 208 ein weiteres vom Medium 204 erzeugtes Echo E1, 207.

Selbstverständlich stellen die dargestellten Merkmale der Echoliste lediglich eine spezielle Implementierung einer Echoliste dar. In der Praxis sind auch Echolisten mit weiteren oder veränderten Merkmalen eines Echos gebräuchlich.

Die Entscheidung, welches der vorliegenden Echos (E0, E1) das vom Medium 204 erzeugte Füllstandecho ist, kann durch Anwendung einer Störechospeicherung maßgeblich vereinfacht werden. Beispielsweise wird vorzugsweise bei nahezu entleertem Behälter eine vom Benutzer zu initiierende Störechospeicherung durchgeführt. Als Ergebnis dieses Verfahrensschrittes wird innerhalb des Störechospeichers 103 (siehe Figs. 1 und 2) eine Störechokurve 302 angelegt, die den Amplitudenverlauf möglicher Störechos E0, 208 exakt erfasst. Während der daran anschließenden Betriebsphase des Sensors kann mit Hilfe des Störechospeichers 103 und der darin enthaltenen Störechokurve 302 eine Klassifikation der Echos der Echoliste 301 durchgeführt werden. Im vorliegenden Beispiel wird Echo E0 208, 303 eindeutig als Störecho erkannt und entsprechend bewertet. Die Entscheidung auf das verbliebene Echo E1 207, 304 als Füllstandecho wird trotz der nahezu identischen Amplitudenwerte der Echos der Echoliste 301 trivial.

Die Anlage der Störechokurve kann vom Sensor auch automatisch initiiert werden.

Das zuvor beschriebene Verfahren kann in der praktischen Umsetzung immer wieder zu Problemen führen.

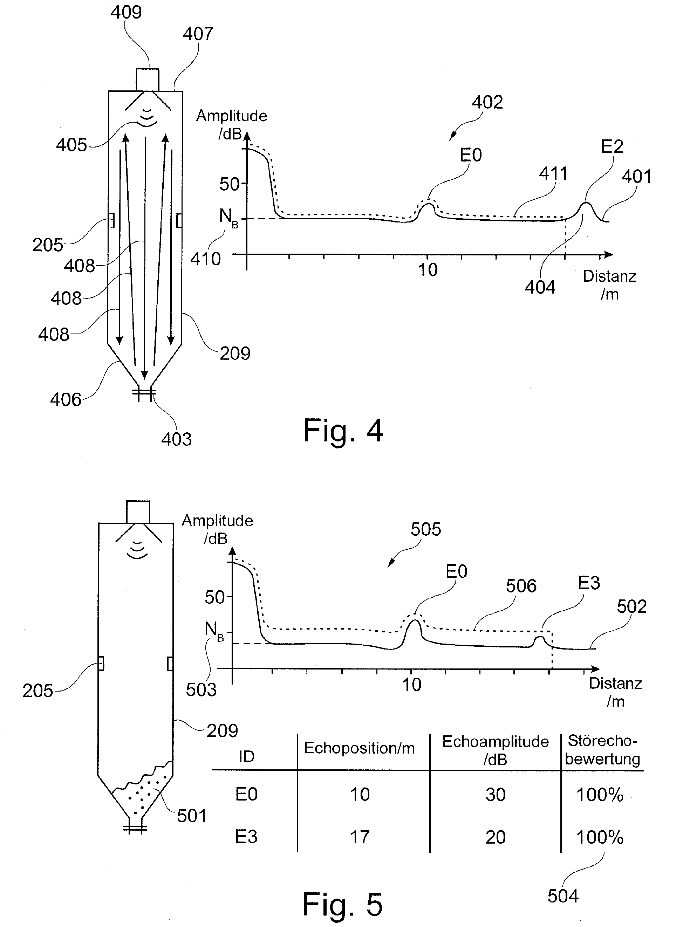

Fig. 4 zeigt den Behälter 209 mit der umlaufenden Schweißnaht 205 in leerem Zustand. Die darin gemessene Echokurve 401 wird im Graphen 402 dargestellt. Im Vergleich zur Echokurve 206 aus Fig. 2 ist deutlich zu sehen, dass das von der Schweißnaht 205 verursachte Echo E0 208 an identischer Stelle wieder erscheint, wohingegen das vom Füllgut 204 verursachte Füllstandecho aufgrund fehlender Befüllung durch das vom Behälterboden 403 verursachte Echo E2 404 ersetzt wird.

Bei genauerer Betrachtung fällt im direkten Vergleich zur Echokurve 206 aus Fig. 2 zudem auf, dass der Rauschpegel **N_{B}** 410 der Echokurve 401 bei ca. 25 dB liegt, wohingegen der vergleichbare Pegel **N_{S}** 213 in Fig. 2 bei ca. 15 dB liegt.

Der grafisch visualisierte Effekt einer Rauschpegelerhöhung kann sich aus den speziellen Reflexionsverhältnissen ergeben, wie sie beim Einsatz von Füllstandmessgeräten auftreten können.

Im halb angefüllten Behälter 209 aus Fig. 2 wird die vom Füllstandmessgerät 201 emittierte Welle 203 an der Oberfläche des Füllgutes 204 reflektiert. Mit dieser Reflexion geht beispielhaft eine starke Dämpfung der emittierten Welle 203 einher. Das vom Füllstandmessgerät empfangene Signal möge daher 40 dB oder mehr unter dem Pegel der ursprünglich emittierten Welle liegen. Signalanteile, welche nach der Reflektion am Medium eine erneute Umlenkung an der Behälterdecke 211 erfahren, treffen nach entsprechender Laufzeit ein zweites Mal auf die Oberfläche des Füllgutes 204, und werden dort erneut reflektiert. Bei dieser zweiten Reflektion möge die Welle erneut eine Dämpfung um 40 dB erfahren. Geht man beispielhaft von einem abgestrahlten relativen Pegel 212 von ca. 80 dB aus, so wird sofort ersichtlich, dass der Pegel einer zweifach reflektierten Welle weit unterhalb des Pegels des sensoreigenen Rauschens **N_{S}** 213 des Füllstandmessgerätes liegt. Das sensoreigene Rauschen eines Füllstandmessgerätes wird im Wesentlichen durch das thermische Rauschen der verwendeten Halbleiterbauelemente verursacht, und liegt bei kommerziellen Füllstandmessgeräten typischerweise bei ca. 15 dB.

Andere Verhältnisse treten nun bei Messungen in komplett entleerten Behältern mit sehr guten Reflexionsverhältnissen auf. Fig. 4 verdeutlicht die Verhältnisse. Im beispielhaft betrachteten Fall einer Füllstandmessung mit Radar wird die emittierte Welle 405 vom Behälterboden 403 und auch von den konischen Behälterteilen 406 des metallischen Behälters 209 reflektiert. Bedingt durch die exzellenten Reflexionseigenschaften der metallischen Behälterwand erfährt das Radarsignal durch diese Reflexion eine nur sehr schwache Dämpfung. Ein Großteil der ursprünglich emittierten Signalenergie kann daher vom Behälterdeckel 407 erneut reflektiert werden. Es wird sofort ersichtlich, dass bedingt durch die kleinen Reflexionsverluste das Signal sehr oft zwischen Behälterdecke und Behälterboden hin und her reflektiert werden kann. Die Signalpfeile 408 sollen die mehrfachen Propagationen des Signals im Behälter verdeutlichen. Das Füllstandmessgerät 409 initiiert periodische Messzyklen, beispielsweise in einem zeitlichen Raster, welches der Laufzeit des abgestrahlten Signals auf einer Länge von 40 m entspricht.

Aufgrund der perfekten Reflexionsverhältnisse können beim Start einer neuen Messung sowohl Signalanteile von der letzten Messung als auch von zeitlich davor liegenden Messungen im Behälter hin- und herlaufen 408. Alle am Detektor des Füllstandmessgerätes gleichzeitig eintreffenden Signale interferieren nun im Empfangsteil des Füllstandmessgerätes. Aufgrund der Vielzahl möglicher Signalpfade, welche zeitgleich am Detektor eintreffen und sich dort überlagern, können die zugehörigen Einzelechos nicht mehr separiert werden, und führen symptomatisch zu einer Erhöhung des Rauschpegels **N_{B}** 410 auf ca. 25 dB.

Der Rauschpegel **N_{B}** wird durch die Überlagerung verschiedener Signalanteile aus dem Behälter verursacht, und soll nachfolgend als Behälterrauschen betrachtet werden. Es sei an dieser Stelle vermerkt, dass dieses "Behälterrauschen" ursächlich nichts mit dem sensoreigenen Rauschen **N_{S}** des Sensors, welches durch thermische Rauschanteile verursacht wird, gemein hat. Die Nomenklatur wird in der vorliegenden Beschreibung ausschließlich aufgrund der Ähnlichkeit in Bezug auf den Verlauf einer empfangenen Echokurve verwendet.

Wird nun nach bekannten Verfahren bei leerem Behälter eine Störechospeicherung ausgelöst, so wird im Sensor eine erhöhte Störechokurve 411 abgelegt. Das von der Schweißnaht 205 verursachte Störecho E0 ist darin korrekt enthalten. Das vom Behälterboden verursachte Bodenecho E2 wird nicht in den Störechospeicher aufgenommen, da es im Falle eines leeren Behälters als aktueller Füllstand verwendet werden soll.

Fig. 5 zeigt nun in einem weiteren Schritt die Verhältnisse, wie sie sich nach einer leichten Befüllung des Behälters ergeben können. Bedingt durch die Materialeigenschaften des Füllgutes 501 (bei dem es sich um ein Schüttgut handelt) und die mitunter ungünstige Schüttlage setzt nun schlagartig eine starke Dämpfung der reflektierten Radarwelle ein. Die zyklische Reflektion von Signalanteilen innerhalb des Behälters 209, wie sie noch in Fig. 4 zu sehen war, kommt unmittelbar zum Erliegen. Die empfangene Echokurve 502 enthält neben der Schweißnahtreflektion (E0) die Reflektion des Füllgutes (E3), welche amplitudenmäßig jedoch nur stark verringert empfangen werden kann. Gleichzeitig ist der Echokurve 502 zu entnehmen, dass das Behälterrauschen **N_{B}** 503 wieder auf das Niveau des sensoreigenen Rauschens **N_{S}** des Füllstandmessgerätes 213 abgesunken ist. Die auf Basis der Echokurve 502 erzeugte Echotabelle 504 zeigt deutlich, dass sowohl das Echo E0 der Behälterschweißnaht 205 als auch das Echo des Mediums 501 als Störecho identifiziert werden. Ein Vergleich mit der Echokurvendarstellung 505 ergibt, dass die Echos E0 und E3 in ihrem Verlauf beide unterhalb der Störechokurve 506 liegen und folglich als Störecho betrachtet werden. Eine Messung des Füllstandes ist in diesem Zustand nun nicht mehr möglich. Das Füllstandmessgerät wird beispielsweise eine Fehlermeldung "Echoverlust" absetzen.

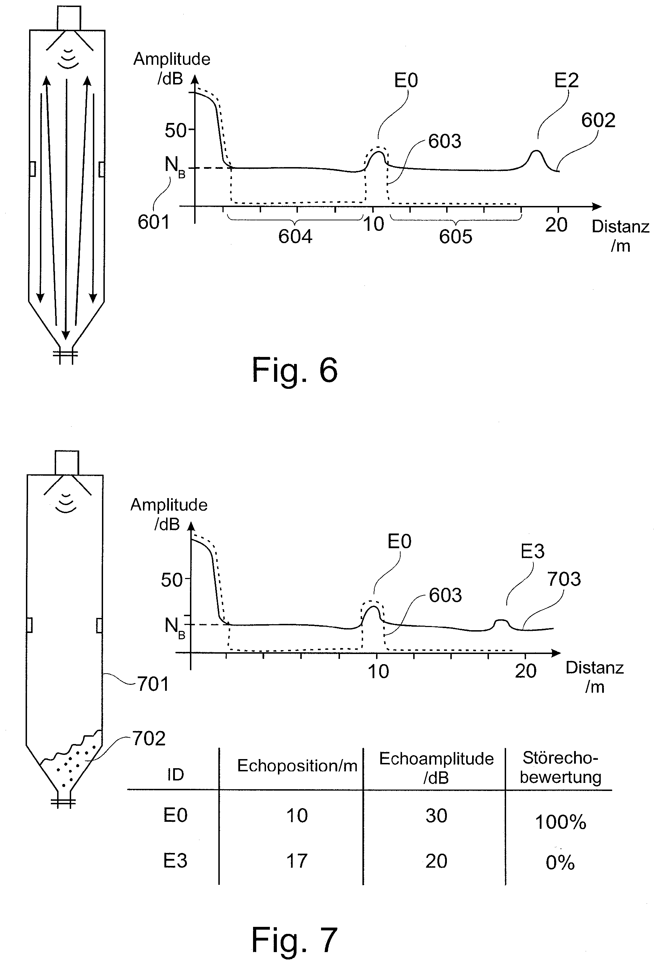

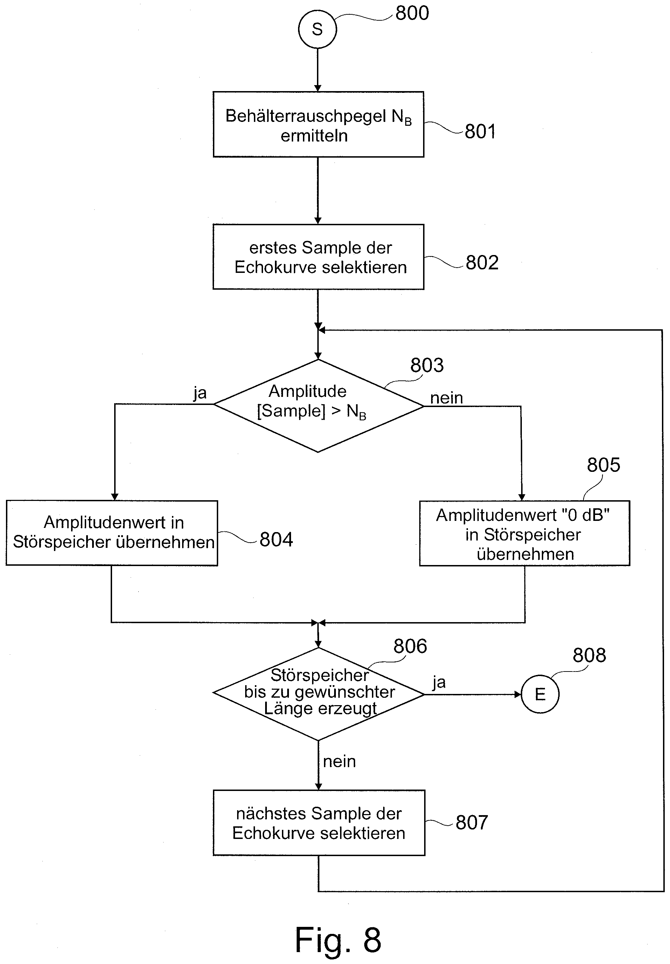

In einem Beispiel, das nicht Teil der Erfindung ist, wird dieses Problem gemäß dem Ablaufdiagramm in Fig. 8 gelöst. Die sich dadurch ergebenden Verhältnisse werden beispielhaft durch die Darstellungen in den Figs. 6 und 7 verdeutlicht.

Das Verfahren setzt mit der Initialisierung oder Aktualisierung eines Störechospeichers 103 (siehe Figs. 1 und 2) ein, wobei vorgenannte Aktionen sowohl vom Benutzer als auch vom Sensor selbst initiiert werden können. Im Schritt 801 wird anhand der aktuellen Echokurve der Behälterrauschpegel N_{B} ermittelt. Dabei kommen entsprechende Verfahren zum Einsatz, beispielsweise eine Regressionsberechnung oder aber auch eine Histogrammanalyse.

Im Schritt 802 (Selektion des ersten Samples der Echokurve) wird nun der erste Abtastpunkt der aktuellen Echokurve selektiert. Falls die Amplitude dieses Samples größer ist als der ermittelte Behälterrauschpegel N_{B}, wird im Schritt 804 dieser Amplitudenwert dazu verwendet, den Störspeicher zu initiieren oder zu aktualisieren. In diesem Verfahrensschritt können selbstverständlich weitere Algorithmen zur Verbesserung der Funktion eines Störechospeichers Verwendung finden, beispielsweise eine Erhöhung der abzulegenden Störechowerte um einen parametrierten Offset - Wert. Ist die Amplitude der Echokurve nicht signifikant größer als das Behälterrauschen, so wird der Störspeicher an entsprechender Stelle gelöscht oder alternativ auf 0 dB gesetzt 805. Das beschriebene Verfahren wird nun Sample für Sample fortgesetzt, bis die vom Benutzer gewünschte Länge einer Störechokurve erzeugt worden ist. Das Verfahren endet schließlich im Endezustand 808.

Fig. 6 zeigt nun die Auswirkungen des beschriebenen Verfahrens beim Anlegen des Störechospeichers. Der Pegel des Behälterrauschens N_{B} 601 ist über weite Bereiche identisch dem Pegel der Echokurve 602. Im Bereich zwischen 2 m und 9,50 m 604 wird der Störechospeicher folglich auf 0 dB initialisiert, ebenso im Bereich zwischen 10,50 m und 18 m.

Fig. 7 zeigt nun die Verhältnisse bei Befüllung des Behälters 701 mit einem Füllgut 702. Das aus der Echokurve 703 ermittelte Behälterrauschen N_{B} sinkt bedingt durch das Ausbleiben von Mehrfachreflexionen ab. Zudem sinkt der Pegel des Füllstandechos E3 auf ein Niveau von weniger als 25 dB ab. Bedingt durch die erfindungsgemäß erzeugte Störechokurve 603 ist der Störechospeicher 103 (siehe Figs. 1 und 2) nun aber in der Lage, lediglich das Echo E0 als Störecho zu identifizieren. Das Echo E3 kann auf einfache Art als Füllstandecho identifiziert werden.

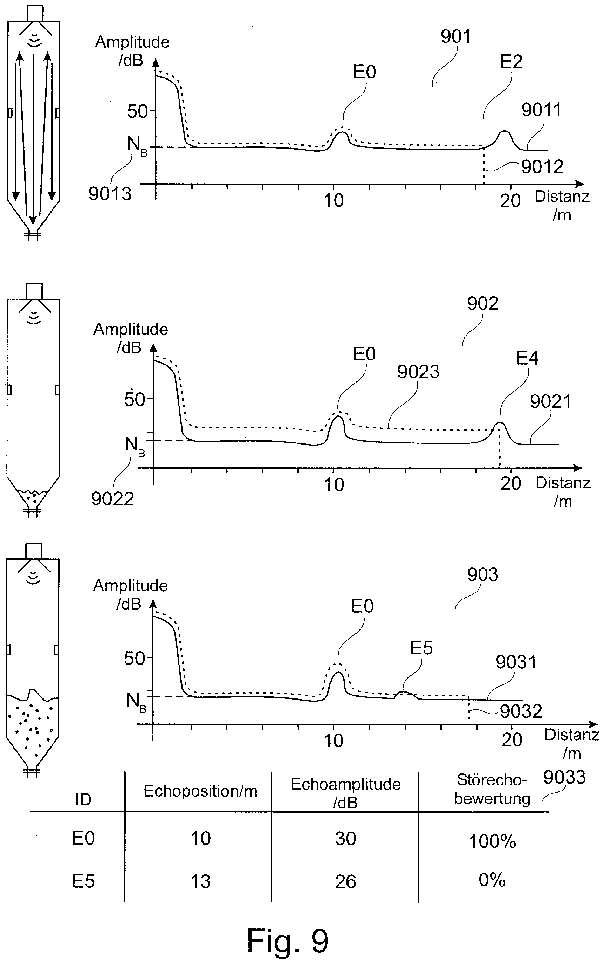

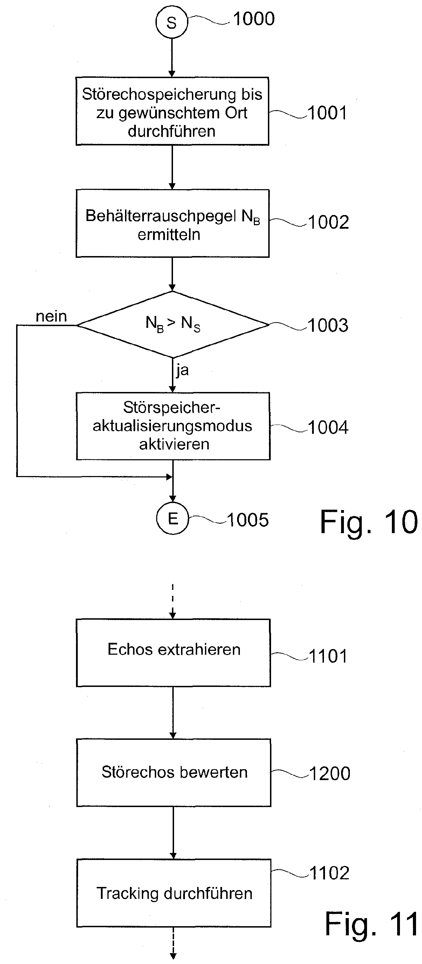

Gemäß der Erfindung kann das Problem auch gemäß den Ablaufdiagrammen der Figs. 10 bis 12 gelöst werden. Die sich dadurch ergebenden Verhältnisse werden beispielhaft durch die Darstellungen in Fig. 9 verdeutlicht.

Das Verfahren teilt sich in zwei Verfahrensteile. Verfahrensteil I wird in Fig. 10 dargestellt, und repräsentiert den Teil des Verfahrens, der im Rahmen einer Initialisierung oder Aktualisierung eines Störechospeichers 103 durchlaufen wird. Der Verfahrensteil beginnt im Schritt 1000. Im Schritt 1001 wird eine Störechospeicherung bis zum gewünschten Ort durchgeführt. Hierfür können bekannte Verfahren angewendet werden. Der gewünschte Ort wird entweder vom Benutzer vorgegeben oder von anderen Softwareteilen innerhalb des Sensors ermittelt. Üblicherweise wird eine Störechospeicherung bis zu einem Ort durchgeführt, dessen Distanz wenig kleiner ist als die Distanz bis zum Beginn des aktuellen Füllstandechos. Im Schritt 1002 wird anhand der aktuell vorliegenden Echokurve der Rauschpegel N_{B} im Behälter ermittelt. Dies kann beispielsweise durch eine Regressionsberechnung oder aber auch eine Histogrammanalyse erfolgen.

Im Schritt 1003 wird nun überprüft, ob das Behälterrauschen N_{B} größer als das sensoreigene Rauschen des Füllstandmessgerätes N_{S} ist. Das sensoreigene Rauschen wird zu diesem Zweck innerhalb der Fertigungsstätte des Füllstandmessgerätes ermittelt und in geeigneter Form im nichtflüchtigen Speicherbereich 103 des Sensors als Kalibrierwert abgelegt. Ist das Behälterrauschen während der Initialisierung oder Aktualisierung des Störechospeichers größer als das sensoreigene Rauschen des Sensors, so wird innerhalb der Signalverarbeitung der Störspeicheraktualisierungsmodus aktiviert 1004.

Fig. 11 zeigt beispielhaft einen Ausschnitt aus der Signalverarbeitungskette innerhalb eines Füllstandmessgerätes, wie sie üblicherweise in jedem Messzyklus einmal abgearbeitet wird.

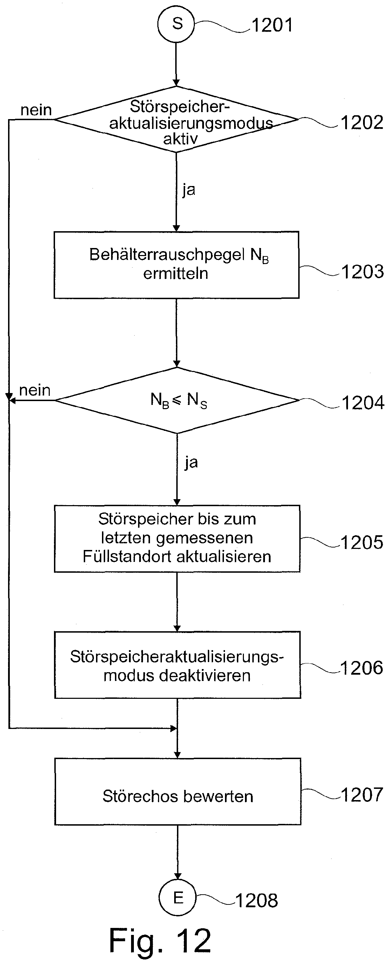

Die klassische Bewertung von Störechos 1200 wird beispielhaft im Anschluss an die Extraktion von Echos aufgerufen. Der Block 1200 wird nun komplett durch den Ablauf des Verfahrensteils II, welcher in Fig. 12 dargestellt ist, ersetzt.

Der modifizierte Verfahrensschritt 1200 beginnt im Zustand 1201. Zunächst wird überprüft, ob der Störspeicheraktualisierungsmodus aktiviert worden ist.

Ist dies nicht der Fall, so wird direkt in Verfahrensschritt 1207 verzweigt. Die dort stattfindende Bewertung von Störechos kann bisherigen Verfahren entsprechen. Vorzugsweise werden die ermittelten Echos mit der im Störspeicher abgelegten Störechokurve verglichen, und entsprechend bewertet.

Ergibt die Überprüfung in Verfahrensschritt 1202 jedoch, dass der Störspeicheraktualisierungsmodus aktiviert worden ist, so wird im Schritt 1203 auf Basis der aktuell vorliegenden Echokurve zunächst das Behälterrauschniveau N_{B} ermittelt. Ist das Behälterrauschen N_{B} auf das im Werk ermittelte Systemrauschniveau N_{S} des Sensors abgesunken, so wird im Schritt 1205 eine Aktualisierung der Störechokurve im Störechospeicher initiiert, wobei die aktuelle Echokurve im Bereich von 0 m bis zum Ort des Beginns des zuletzt vermessenen Füllstandechos in den Störechospeicher übernommen wird. Im Schritt 1206 wird schließlich der Störspeicheraktualisierungsmodus deaktiviert, bevor mit dem Verfahrensschritt 1207 eine routinemäßige Bewertung der Störechos erfolgt. Das Verfahren endet im Schritt 1208.

Fig. 9 veranschaulicht die Auswirkungen einer Anwendung des Verfahrens. Echokurvendarstellung 901 zeigt die Verhältnisse bei leerem Behälter. Aufgrund der initiierten Störechospeicherung wird der Verlauf der aktuellen Echokurve 9011 im Bereich bis 18 m in den Störechospeicher übernommen. Die sich ergebende Störechokurve 9012 wird ebenfalls in der Darstellung 901 visualisiert.

Aufgrund des erhöhten Behälterrauschniveaus N_{B} 9013 wird zudem der Störspeicheraktualisierungsmodus aktiviert.

Die Darstellung 902 zeigt die Echokurve 9021, wie sie nach leichter Befüllung des Behälters empfangen wird. Das Behälterrauschen 9022 verringert sich sehr schnell bis auf das im Werk gespeicherte Niveau des sensoreigenen Rauschens N_{S}. Aufgrund des aktivierten Störspeicheraktualisierungsmodus wird dies zum Anlass genommen, eine neuerliche Störspeicherung innerhalb des Sensors zu initiieren. Die bislang gespeicherte Störechokurve 9023, 9012 wird bis zu einer Entfernung von 17 m unter Verwendung der aktuell vorliegenden Echokurve 9021 aktualisiert. Zudem wird der Störspeicheraktualisierungsmodus wieder deaktiviert.

Von nun an operiert der Sensor in einem normalen Modus gemäß dem Stand der Technik. Darstellung 903 zeigt eine Echokurve 9031, wie sie bei weiter gefülltem Behälter empfangen werden kann. Die Störechokurve 9032 wurde zwischenzeitlich unter Verwendung der Echokurve 9021 aktualisiert, und beinhaltet keinerlei Anteile eines erhöhten Behälterrauschens mehr. Das vom Füllgut herrührende Füllstandecho E5 liegt nun deutlich über der Störechokurve 9032, wohingegen das Störecho E0 weiterhin sicher als Störecho erkannt werden kann 9033. Die Identifikation des Echos E5 als Füllstandecho kann in sicherer und einfacher Art und Weise erfolgen.

Das vorliegende Verfahren kompensiert den Effekt eines Anstieges des Behälterrauschens bei vollkommen entleertem Behälter.

Das Verfahren wird zur Initialisierung und / oder Aktualisierung des Störechospeichers 103 des Füllstandmessgerätes eingesetzt und ist dadurch gekennzeichnet, dass die Initialisierung und / oder Aktualisierung des Störechospeichers von zumindest einem Wert für das Rauschen abhängig ist.

Insbesondere kann die Initialisierung und / oder Aktualisierung des Störechospeichers von zumindest einem Wert für das sensoreigene Rauschen 213 abhängig sein. Auch kann die Initialisierung und / oder Aktualisierung des Störechospeichers von zumindest einem Wert für das Behälterrauschen 410 abhängig sein.

## Patentansprüche

1. Füllstandradar zur Messung eines Füllstands und zur Störechospeicherung, das Füllstandradar aufweisend:
eine Recheneinheit (220) zur Aktualisierung von Störechodaten auf Basis eines ersten Wertes (N_{B}), der mit einem ersten Rauschpegel korrespondiert;
einen Störechospeicher (103) zum Speichern der Störechodaten;
wobei es sich bei dem ersten Rauschpegel um einen Behälterrauschpegel bei leerem Behälter handelt;
wobei die Recheneinheit (220) zur Aktualisierung der Störechodaten auf Basis eines zweiten, im Werk ermittelten, Wertes (N_{S}) ausgeführt ist, der mit einem zweiten Rauschpegel korrespondiert; wobei es sich bei dem zweiten Rauschpegel um einen sensoreigenen Rauschpegel handelt; wobei die Recheneinheit (220) zur Bestimmung, ob der erste Wert (N_{B}) größer ist als der zweite Wert (N_{S}), ausgeführt ist; wobei die Recheneinheit (220) zur Aktivierung eines Störspeicheraktualisierungsmodus ausgeführt ist, wenn der erste Wert (N_{B}) größer ist als der zweite Wert (N_{S}).

2. Füllstandradar nach einem der vorhergehenden Ansprüche,
wobei die Recheneinheit (220) zur Bestimmung des ersten Wertes (N_{B}) unter Verwendung einer erfassten Echokurve ausgeführt ist.

3. Füllstandradar nach Anspruch 2,
wobei die Recheneinheit (220) zur Bestimmung des ersten Wertes (N_{B}) auf Basis einer Regressionsberechnung oder einer Histogrammanalyse ausgeführt ist.

4. Füllstandradar nach einem der vorhergehenden Ansprüche,
wobei die Recheneinheit (220) zur Initialisierung von Störechodaten auf Basis des ersten Wertes (N_{B}) oder des zweiten Wertes (N_{S}) ausgeführt ist.

5. Füllstandradar nach einem der vorhergehenden Ansprüche,
wobei der zweite Wert (N_{S}) in dem Störechospeicher (103) abgelegt ist.

6. Verfahren zur Messung eines Füllstands und zur Störechospeicherung mit einem Füllstandradar, das Verfahren aufweisend den Schritt:
Aktualisieren von Störechodaten auf Basis eines ersten Wertes (N_{B}), der mit einem ersten Rauschpegel korrespondiert;
wobei es sich bei dem ersten Rauschpegel um einen Behälterrauschpegel bei leerem Behälter handelt;
wobei die Recheneinheit (220) zur Aktualisierung der Störechodaten auf Basis eines zweiten, im Werk ermittelten, Wertes (N_{S}) ausgeführt ist, der mit einem zweiten Rauschpegel korrespondiert; wobei es sich bei dem zweiten Rauschpegel um einen sensoreigenen Rauschpegel handelt; wobei die Recheneinheit (220) zur Bestimmung, ob der erste Wert (N_{B}) größer ist als der zweite Wert (N_{S}), ausgeführt ist; wobei die Recheneinheit (220) zur Aktivierung eines Störspeicheraktualisierungsmodus ausgeführt ist, wenn der erste Wert (N_{B}) größer ist als der zweite Wert (N_{S}).

7. Programmelement, das, wenn es auf einem Prozessor eines Füllstandradars ausgeführt wird, den Prozessor anleitet, den folgenden Schritt durchzuführen:
Aktualisieren von Störechodaten auf Basis eines ersten Wertes (N_{B}), der mit einem ersten Rauschpegel korrespondiert;
wobei es sich bei dem ersten Rauschpegel um einen Behälterrauschpegel bei leerem Behälter handelt;
wobei die Recheneinheit (220) zur Aktualisierung der Störechodaten auf Basis eines zweiten, im Werk ermittelten, Wertes (N_{S}) ausgeführt ist, der mit einem zweiten Rauschpegel korrespondiert; wobei es sich bei dem zweiten Rauschpegel um einen sensoreigenen Rauschpegel handelt; wobei die Recheneinheit (220) zur Bestimmung, ob der erste Wert (N_{B}) größer ist als der zweite Wert (N_{S}), ausgeführt ist; wobei die Recheneinheit (220) zur Aktivierung eines Störspeicheraktualisierungsmodus ausgeführt ist, wenn der erste Wert (N_{B}) größer ist als der zweite Wert (N_{S}).

8. Computerlesbares Medium, auf dem ein Programmelement gespeichert ist, das, wenn es auf einem Prozessor eines Füllstandradars ausgeführt wird, den Prozessor anleitet, den folgenden Schritt durchzuführen:
Aktualisieren von Störechodaten auf Basis eines ersten Wertes (N_{B}), der mit einem ersten Rauschpegel korrespondiert;
wobei es sich bei dem ersten Rauschpegel um einen Behälterrauschpegel bei leerem Behälter handelt; und
wobei die Recheneinheit (220) zur Aktualisierung der Störechodaten auf Basis eines zweiten, im Werk ermittelten, Wertes (N_{S}) ausgeführt ist, der mit einem zweiten Rauschpegel korrespondiert; wobei es sich bei dem zweiten Rauschpegel um einen sensoreigenen Rauschpegel handelt; wobei die Recheneinheit (220) zur Bestimmung, ob der erste Wert (N_{B}) größer ist als der zweite Wert (N_{S}), ausgeführt ist; wobei die Recheneinheit (220) zur Aktivierung eines Störspeicheraktualisierungsmodus ausgeführt ist, wenn der erste Wert (N_{B}) größer ist als der zweite Wert (N_{S}).

## Claims

1. A fill level radar for measuring a fill level and for storing a false echo, the fill level radar comprising:
a computing unit (220) for updating false echo data based on a first value (N_{B}) corresponding to a first noise level;
a false echo memory (221) for storing the false echo data;
wherein the first noise level is a container noise level when the container is empty;
wherein the computing unit (220) is adapted to update the false echo data on the basis of a second value (N_{S}) determined in a factory, which corresponds to a second noise level; wherein the second noise level is a sensor-inherent noise level; wherein the computing unit (220) is adapted to determine whether the first value (N_{B}) is greater than the second value (N_{S}); wherein the computing unit (220) is adapted to activate a false echo memory update mode if the first value (N_{B}) is greater than the second value (N_{S}).

2. The fill level radar according to any of the preceding claims,
wherein the computing unit (220) is designed to determine the first value (N_{B}) using a detected echo curve.

3. The fill level radar according to claim 2,
wherein the computing unit (220) is designed to determine the first value (N_{B}) on the basis of a regression calculation or a histogram analysis.

4. The fill level radar according to any of the preceding claims,
wherein the computing unit (220) is designed for initialising false echo data on the basis of the first value (N_{B}) or the second value (NS).

5. The fill level radar according to one of the preceding claims,
the the second value (N_{S}) being stored in the false echo memory (103).

6. A method for measuring a filling level and for storing a false echo by means of a fill level radar, the method comprising the step:
updating false echo data based on a first value (N_{B}) corresponding to a first noise level;
wherein the first noise level is a container noise level when the container is empty;
wherein the computing unit (220) is adapted to update the false echo data on the basis of a second value (N_{S}) determined in a factory, which corresponds to a second noise level; wherein the second noise level is a sensor-inherent noise level; wherein the computing unit (220) is adapted to determine whether the first value (N_{B}) is greater than the second value (N_{S}); wherein the computing unit (220) is adapted to activate a false echo update mode if the first value (N_{B}) is greater than the second value (N_{S}).

7. A program element which, when executed on a processor of a fill level radar, instructs the processor to perform the following step:
updating false echo data based on a first value (N_{B}) corresponding to a first noise level;
wherein the first noise level is an empty container noise level;
wherein the computing unit (220) is adapted to update the false echo data on the basis of a second value (N_{S}) determined in a factory, which corresponds to a second noise level; wherein the second noise level is a sensor-inherent noise level; wherein the computing unit (220) is adapted to determine whether the first value (N_{B}) is greater than the second value (N_{S}); wherein the computing unit (220) is adapted to activate a false memory update mode if the first value (N_{B}) is greater than the second value (N_{S}).

8. A computer readable medium having stored thereon a program element which, when executed on a processor of a level radar, instructs the processor to perform the following step:
updating false echo data based on a first value (N_{B}) corresponding to a first noise level;
wherein the first noise level is an empty container noise level;
wherein the computing unit (220) is adapted to update the false echo data on the basis of a second value (N_{S}) determined in a factory, which corresponds to a second noise level; wherein the second noise level is a sensor-inherent noise level; wherein the computing unit (220) is adapted to determine whether the first value (N_{B}) is greater than the second value (N_{S}); wherein the computing unit (220) is adapted to activate a false memory update mode if the first value (N_{B}) is greater than the second value (N_{S}).

## Revendications

1. Radar de niveau de remplissage destiné à la mesure d'un niveau de remplissage et à l'enregistrement d'écho parasite, le radar de niveau de remplissage comportant :
une unité de calcul (220) destinée à la mise à jour de données d'écho parasite sur la base d'une première valeur (N_{B}), qui correspond à un premier niveau de bruit ;
une mémoire d'écho parasite (103) destinée à l'enregistrement des données d'écho parasite ;
le premier niveau de bruit étant un niveau de bruit de récipient lorsque le récipient est vide ;
l'unité de calcul (220) étant conçue pour la mise à jour de données d'écho parasite sur la base d'une seconde valeur (N_{S}), déterminée à l'usine, qui correspond à un second niveau de bruit ; le second niveau de bruit étant un niveau de bruit propre au capteur ; l'unité de calcul (220) étant conçue pour déterminer si la première valeur (N_{B}) est supérieure à la seconde valeur (N_{S}) ; l'unité de calcul (220) étant conçue pour activer un mode de mise à jour de mémoire de parasitage, quand la première valeur (N_{B}) est supérieure à la seconde valeur (N_{S}).

2. Radar de niveau de remplissage selon l'une des revendications précédentes,
dans lequel l'unité de calcul (220) est conçue pour déterminer la première valeur (N_{B}) au moyen d'une courbe d'écho acquise.

3. Radar de niveau de remplissage selon la revendication 2, dans lequel l'unité de calcul (220) est conçue pour déterminer la première valeur (N_{B}) sur la base d'un calcul de régression ou d'une analyse d'histogramme.

4. Radar de niveau de remplissage selon l'une des revendications précédentes,
dans lequel l'unité de calcul (220) est conçue pour initialiser des données d'écho parasite sur la base de la première valeur (N_{B}) ou de la seconde valeur (N_{S}).

5. Radar de niveau de remplissage selon l'une des revendications précédentes,
dans lequel la seconde valeur (N_{S}) est enregistrée dans la mémoire d'écho parasite (103).

6. Procédé de mesure d'un niveau de remplissage et d'enregistrement d'écho parasite avec un radar de niveau de remplissage, le procédé comportant l'étape consistant à :
mettre à jour des données d'écho parasite sur la base d'une première valeur (N_{B}), qui correspond à un premier niveau de bruit ;
le premier niveau de bruit étant un niveau de bruit de récipient lorsque le récipient est vide ;
l'unité de calcul (220) étant conçue pour la mise à jour de données d'écho parasite sur la base d'une seconde valeur (N_{S}), déterminée à l'usine, qui correspond à un second niveau de bruit ; le second niveau de bruit étant un niveau de bruit propre au capteur ; l'unité de calcul (220) étant conçue pour déterminer si la première valeur (N_{B}) est supérieure à la seconde valeur (N_{S}) ; l'unité de calcul (220) étant conçue pour activer un mode de mise à jour de mémoire de parasitage, quand la première valeur (N_{B}) est supérieure à la seconde valeur (N_{S}).

7. Élément de programme qui, quand il est exécuté sur un processeur d'un radar de niveau de remplissage, amène le processeur à exécuter l'étape suivante consistant à :
mettre à jour des données d'écho parasite sur la base d'une première valeur (N_{B}), qui correspond à un premier niveau de bruit ;
le premier niveau de bruit étant un niveau de bruit de récipient lorsque le récipient est vide ;
l'unité de calcul (220) étant conçue pour la mise à jour de données d'écho parasite sur la base d'une seconde valeur (N_{S}), déterminée à l'usine, qui correspond à un second niveau de bruit ; le second niveau de bruit étant un niveau de bruit propre au capteur ; l'unité de calcul (220) étant conçue pour déterminer si la première valeur (N_{B}) est supérieure à la seconde valeur (N_{S}) ; l'unité de calcul (220) étant conçue pour activer un mode de mise à jour de mémoire de parasitage, quand la première valeur (N_{B}) est supérieure à la seconde valeur (N_{S}).

8. Support lisible par ordinateur sur lequel est enregistré un élément de programme qui, quand il est exécuté sur un processeur d'un radar de niveau de remplissage, amène le processeur à exécuter l'étape suivante consistant à :
mettre à jour des données d'écho parasite sur la base d'une première valeur (N_{B}), qui correspond à un premier niveau de bruit ;
le premier niveau de bruit étant un niveau de bruit de récipient lorsque le récipient est vide ;
l'unité de calcul (220) étant conçue pour la mise à jour de données d'écho parasite sur la base d'une seconde valeur (N_{S}), déterminée à l'usine, qui correspond à un second niveau de bruit ; le second niveau de bruit étant un niveau de bruit propre au capteur ; l'unité de calcul (220) étant conçue pour déterminer si la première valeur (N_{B}) est supérieure à la seconde valeur (N_{S}) ; l'unité de calcul (220) étant conçue pour activer un mode de mise à jour de mémoire de parasitage, quand la première valeur (N_{B}) est supérieure à la seconde valeur (N_{S}).
